# EUROPEAN PATENT APPLICATION

(11) **EP 3 381 823 A1**
(43) Date of publication of application: **03.10.2018**
(21) Application number: 17001116.7
(22) Date of filing: 29.06.2017
(51) Int. Cl.: B65C 9/18

(54) **DEVICE FOR FORMING AND TRANSFERRING DECORATIVE BANNERS FOR THERMOFORMING PACKAGING MACHINES**

(30) Priority: 31.03.2017 ES 201700366
(71) Applicant: Mecánica y Tecnología Alimentaria, S.L., 28043 Madrid (ES)
(72) Inventor: Hernández Socastro, José Manuel, 28043 Madrid (ES)
(74) Representative: Maldonado Jordan, Julia

(57) **Abstract**

Device for forming and transferring decorative banners for packaging machines of thermoformed packaging; comprising a support structure (11) on which there are mounted: a roll (12) of main strip of material; a compensation unit (103) of the main strip of material supplied by the roll (12); a cutting unit (14) that separates the main strip of material into a plurality of longitudinal strips (15) that are moved on guide rollers (16) to an applicator head (17) for applying banners on packaging (3) in a work area (21) of a packaging machine. The device is characterized in that the applicator head (17), responsible for positioning the banners on the packaging (3), is arranged in an upper vertical position over a work area (21) of the packaging machine (2).

## Description

### Object of the invention

The object of the present invention is a device for forming and transferring decorative banners for packaging machines of thermoformed packaging, which has some particular constructions intended to enable an upper vertical introduction of said banners; and to manually or automatically introduce or withdraw the device from the work area of the packaging machine in order to facilitate maintenance tasks and access to the packaging forming mold.

### Field of application of the invention

This invention is applicable in the field dedicated to the manufacturing of packaging machines of thermoformed packaging.

### State of the art

In this section it is worth mentioning the existence of the patent ES 2 385 149 B1 of the same applicant of the present invention, which describes a device for forming and transferring longitudinal bands of paper to the decorative carriage for a packaging machine for thermoformed packaging.

Said device comprises: - a roll support roller; - a unit for longitudinally cutting into longitudinal strips; - guide rollers for the longitudinal strips; - guide rails of the introduction carriage; - a gear motor associated to a toothed belt, which is joined in turn to the introduction and transversal cutting device, moving it transversally in the direction of the device for forming transversal strips at a controlled speed; - guide rails of the mobile carriage of the introduction and transversal banner-cutting unit; - at least one compensation device made up of an assembly of fixed and movable rollers, by means of mechanical transmission means actuated by the gear motor for moving the introduction and transversal cutting module.

Said prior art envisages the automatic transference of the device between a working position and a verification position; carrying out the delivery of the longitudinal strips in horizontal position.

These characteristics imply a certain rigidity in construction which brings with it a limitation that relates to maintenance tasks and access to the entire production line, as well as to the production capacity.

Another limitation of this type of device is the difficulty of changing the format with regards to the width and height of the paper supplied due precisely to said horizontal feeding.

The applicant of the present invention does not know of the existence of devices of the aforementioned type which make it possible to satisfactorily solve the problems set forth. Therefore, the technical problem posed is the development of a device for forming and transferring decorative banners for packaging machines of thermoformed packaging, which contributes a competitive advantage both with regards to the change in format of the banners or decorative paper strips supplied to the packaging machine, as well as to the increase in production capacity and the versatility of the device which relates to the incorporation or separation thereof with respect to the packaging machine.

### Description of the invention

This device comprises a series of common elements that exist in the cited prior art; such as: - a support roller of a roll of decorative paper; - a unit for longitudinally cutting the paper into longitudinal strips and; - rollers for guiding the longitudinal strips towards applicator head for applying the banners on thermoformed packaging in a work area of the packaging machine for thermoformed packaging.

This device has characteristics intended to solve the problems set forth previously.

To do so, and according to the invention, the applicator head of the device, instead of the horizontal position of the cited prior art, is arranged in an upper vertical position with respect to the work area of the packaging machine, which provides the following advantages:
- Increase in production of at least 10%, since it enables the packaging machine to work with a rotating system with at least two molds; one receives the banner and the other forms the packaging.
- It allows for maintaining the characteristics of the current horizontal system, with regards to working with different banner widths and lengths, which means that the line can manufacture packaging with several formats of height and diameter; unlike other existing machines that can only manufacture one packaging model per machine.

Another characteristic of the invention consists of the device being mounted on support means suitable for the manual or automatic introduction or extraction thereof from the work area of the packaging machine. This enables working outside of the machine facilitating the maintenance thereof and access to the production line.

These support means comprise contact wheels on the floor and/or prismatic guides fastened to the chassis of the packaging machine.

These and other characteristics of the invention will be understood more easily in light of the examples of embodiments shown in the attached figures, which are described below.

### Description of the figures

As a complement to the description being made, and for the purpose of helping to make the characteristics of the invention more readily understandable, this specification is accompanied by a set of drawings which, by way of illustration and not limitation, represent the following.
- Figure 1 shows a schematic elevation view of an exemplary embodiment of the device of the invention for forming and transferring decorative banners for packaging machines of thermoformed packaging according to the invention, arranged in an upper vertical position with respect to the work zone of a packaging machine with a rotating system.
- Figure 2 shows a schematic plan view of the device of the previous figure in which the cutting and the introduction of the banners is carried out in a direction perpendicular to the forming line of the packaging.
- Figure 3 shows an upper plan view of a variant embodiment of the device of the previous figures in which the cutting of the banners is parallel to the forming line of the packaging, while the introduction thereof is perpendicular to said forming line.

### Preferred embodiment of the invention

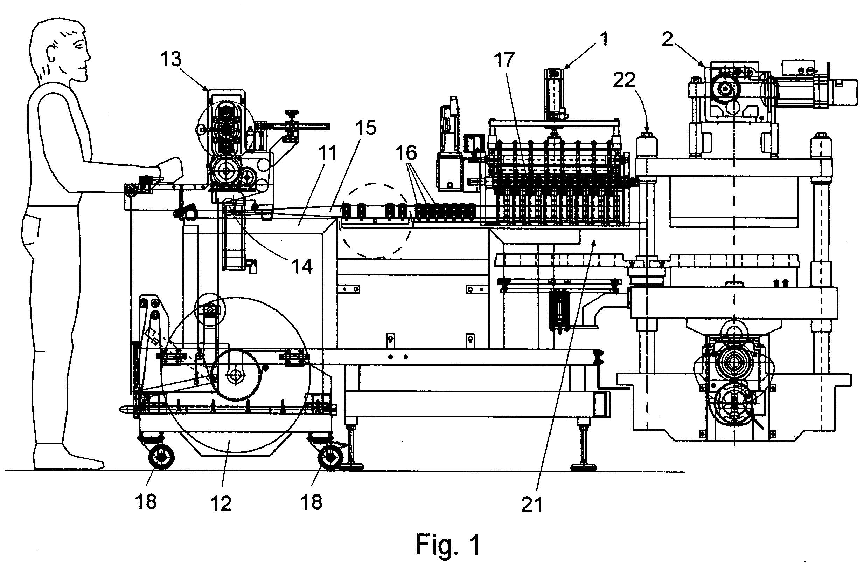

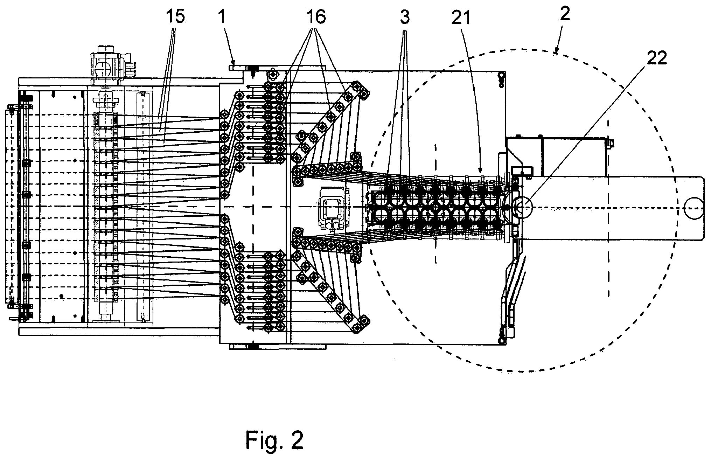

In the exemplary embodiment shown in figures 1 and 2, the device (1) of the invention is shown schematically, arranged in an operating position with respect to the work area (21) of a packaging machine (2) of thermoformed packaging, provided with a rotating system with respect to a vertical shaft (22).

The device (1) for forming and transferring decorative banners to the packaging machine (2) comprises a support structure (11) enabled for manual or automatic movement for the introduction or extraction thereof in an area located above the work area (21) of the packaging machine (2).

The elements necessary for forming and dispensing decorative banners of the packaging are mounted on top of the mentioned support structure (11), from a roll (12) of main strip of material.

Said elements comprise a compensation unit (13) of the main strip of material supplied by the roll (12), a cutting unit (14) that performs a series of parallel cuts in the main strip of material, separating it into a plurality of longitudinal strips (15) that are moved on guide rollers (16) to an applicator head (17) arranged in an upper vertical position over the work area of the packaging machine (2) and that is responsible for positioning the banners on the packaging (3).

In the exemplary embodiment shown in figures 1 and 2 the cutting unit (14) and the guide rollers (16) are oriented such that the cutting of the longitudinal strips (15) and the introduction thereof into the packaging machine is carried out in a direction perpendicular to the forming line of the packaging.

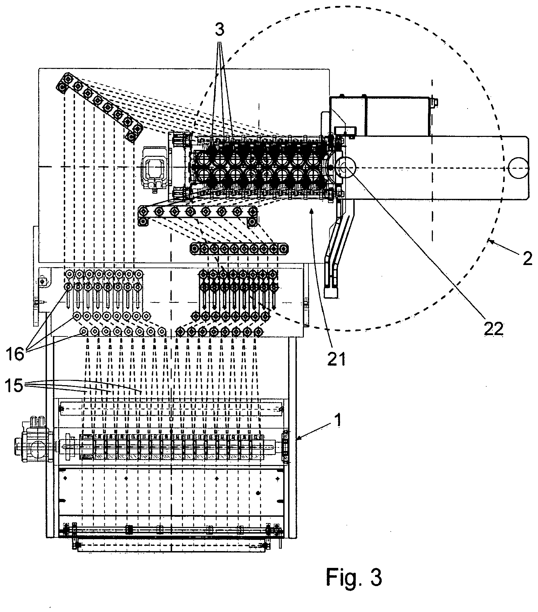

In the variant embodiment shown in figure 3, the cutting unit (14) and the guide rollers (16) are oriented such that the longitudinal cut of the longitudinal strips (15) is parallel to the forming line of the packaging (3), then moving along the guide rollers (16) that cause a 90-degree change in the advance direction thereof, such that the introduction thereof into the packaging machine is perpendicular to the forming line of the packaging (3); achieving in this embodiment a reduction of the space necessary for the installation of the forming and transferring device of the banners to the packaging (3).

Having sufficiently described the nature of the invention, in addition to an example of preferred embodiment, it is hereby stated for the relevant purposes that the materials, shape, size and layout of the described elements may be modified, provided that it does not imply altering the essential characteristics of the invention claimed below.

## Claims

1. A device for forming and transferring decorative banners for packaging machines of thermoformed packaging; said device (1) comprising a support structure (11) on which there are mounted: a roll (12) of main strip of material; a compensation unit (103) of the main strip of material supplied by the roll (12); a cutting unit (14) that separates the main strip of material into a plurality of longitudinal strips (15) that are moved on guide rollers (16) to an applicator head (17) for applying banners on packaging (3) in a work area (21) of a packaging machine; **characterized in that** the applicator head (17) responsible for positioning the banners on the packaging (3) is arranged in an upper vertical position over a work area (21) of the packaging machine (2).

2. The device, according to claim 1, **characterized in that** it comprises suitable support means for the manual or automatic movement thereof and the introduction or extraction thereof in a work area (21) of the packaging machine (2).

3. The device, according to claim 2, **characterized in that** the support means comprise contact wheels (18) on the floor and/or prismatic guides fastened to the packaging machine.

4. The device, according to claim 1, **characterized in that** the cutting unit (14) and the guide rollers (16) are oriented such that the longitudinal cut of the longitudinal strips (15) and the introduction thereof into the packaging machine (2) is carried out in a direction perpendicular to the forming line of the packaging (3).

5. The device, according to claim 1, **characterized in that** the cutting unit (14) and the guide rollers (16) are oriented such that the longitudinal cut of the longitudinal strips (15) is parallel to the forming line of the packaging (3), and the introduction thereof into the packaging machine (2) is performed in a direction perpendicular to the forming line of the packaging (3).
